# EUROPEAN PATENT SPECIFICATION

(11) **EP 3 554 743 B1**
(45) Date of publication and mention of the grant of the patent: **27.04.2022**
(21) Application number: 17882251.6
(22) Date of filing: 06.11.2017
(51) Int. Cl.: B22C 9/22, B22D 29/00, B28B 1/00, B28B 7/34, B33Y 10/00, B33Y 80/00, B22C 9/02, B22C 9/08, B22C 9/10

(54) **AN INTEGRATED CORE-SHELL CASTING MOULD AND FILTER AND METHOD OF MANUFACTURING THE SAME**
EINE INTEGRIERTE KERN-SHELL-GUSSFORM UND FILTER UND HERSTELLUNGSVERFAHREN
MOULE ET FILTRE DE COULÉE CORE-COQUE INTÉGRÉS ET PROCEDE DE FABRICATION ASSOCIÉS

(30) Priority: 13.12.2016 US 201615377759
(43) Date of publication of application: 23.10.2019
(73) Proprietor: General Electric Company, Schenectady, NY 12345 (US)
(72) Inventor: YANG, Xi, Mason, OH 45040 (US); DEINES, James, Herbert, Cincinnati, OH 45215 (US); MCCARREN, Michael, John, Alpha, OH 453012 (US); PRZESLAWSKI, Brian, David, Cincinnati, OH 45215 (US); PETERSON, Brian, Patrick, Cincinnati, OH 45243 (US); GARAY, Gregory, Terrence, Cincinnati, OH 45215 (US)
(74) Representative: Hafner & Kohl PartmbB
(86) International application number: PCT/US2017/060165
(87) International publication number: WO 2018/111438

(56) References cited:
- EP-A1- 1 152 848
- WO-A1-00/32331
- US-A1- 2001 024 000
- US-A1- 2004 231 822
- US-A1- 2010 003 619
- US-A1- 2010 028 645
- US-A1- 2012 248 657
- US-A1- 2014 271 129
- US-A1- 2014 271 129
- US-A1- 2015 321 249
- US-A1- 2015 321 249
- US-A1- 2016 221 262
- US-B2- 8 851 151

## Description

### INTRODUCTION

The present disclosure generally relates to investment casting integrated core-shell molds and processes utilizing these integrated molds. The core-shell molds made in accordance with the present invention includes integrated ceramic filters for filtering molten metal upon addition to the mold. These core-shell molds also include integrated ceramic filaments between the core and shell of the mold that can be utilized to form holes, i.e., effusion cooling holes, in the cast component made from these molds. The integrated core-shell molds provide useful properties in casting operations, such as in the casting of superalloys used to make turbine blades and stator vanes for jet aircraft engines or power generation turbine components.

### BACKGROUND

Many modern engines and next generation turbine engines require components and parts having intricate and complex geometries, which require new types of materials and manufacturing techniques. Conventional techniques for manufacturing engine parts and components involve the laborious process of investment or lost-wax casting. One example of investment casting involves the manufacture of a typical rotor blade used in a gas turbine engine. A turbine blade typically includes hollow airfoils that have radial channels extending along the span of a blade having at least one or more inlets for receiving pressurized cooling air during operation in the engine. The various cooling passages in a blade typically include a serpentine channel disposed in the middle of the airfoil between the leading and trailing edges. The airfoil typically includes inlets extending through the blade for receiving pressurized cooling air, which include local features such as short turbulator ribs or pins for increasing the heat transfer between the heated sidewalls of the airfoil and the internal cooling air.

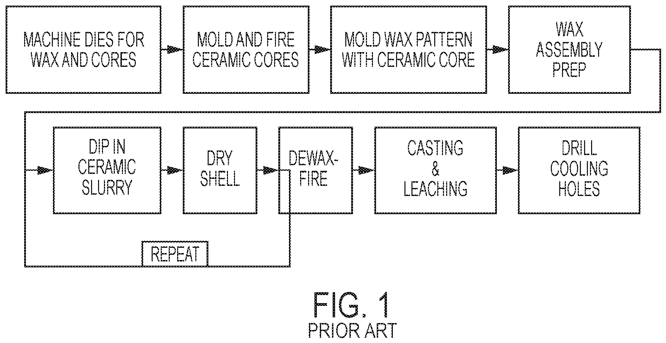

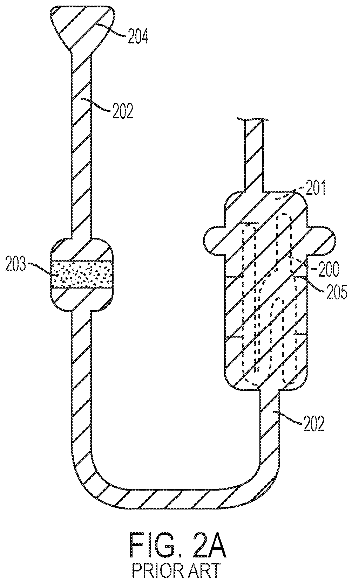

The manufacture of these turbine blades, typically from high strength, superalloy metal materials, involves numerous steps shown in FIG. 1. First, a precision ceramic core is manufactured to conform to the intricate cooling passages desired inside the turbine blade. A precision die or mold is also created which defines the precise 3-D external surface of the turbine blade including its airfoil, platform, and integral dovetail. A schematic view of such a mold structure is shown in FIGS. 2A-2C. The ceramic core 200 is assembled inside two die halves which form a space or void therebetween that defines the resulting metal portions of the turbine blade. Wax is injected into the assembled dies to fill the void and surround the ceramic core encapsulated therein. The two die halves are split apart and removed from the molded wax. The molded wax has the precise configuration of the desired turbine blade. The molded wax blade 201 with encapsulated ceramic core 200 is then attached to a wax tree structure 202 that will ultimately define a flowpath for molten metal into the ceramic mold. The wax blade includes pins 205 for holding the core in place. The tree structure 202 may include a funnel shaped portion 204 for adding molten metal to the mold. As shown in FIG. 2A, the tree structure 202 includes a ceramic filter 203 for filtration of molten metal in the casting operation.

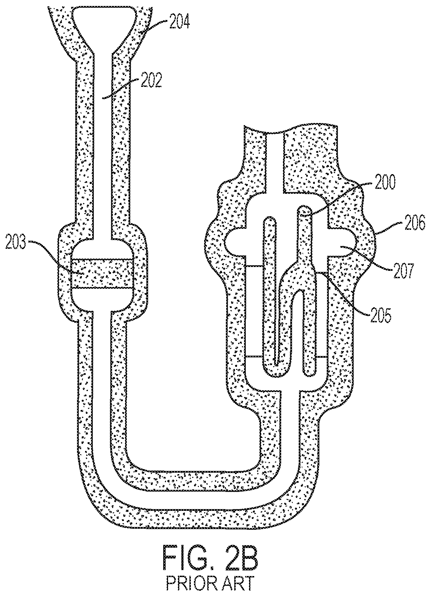

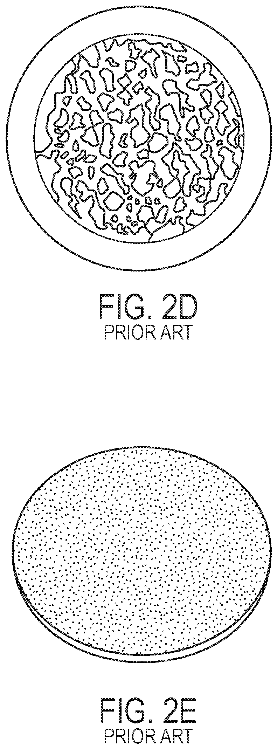

The ceramic filters known in the art include ceramic foam filters (CFF) as shown in FIG. 2D. These filters are formed by impregnating reticulated polyurethane foam with ceramic slip, removing the excess slip by squeezing the foam, and then drying and firing the body forming a CFF. Other known ceramic filters include symmetric filters such as the standard flat primary filter shown in FIG. 2E. More recently, ceramic filters have been made using various additive technologies. For example, U.S. Patent Application Pub. No. 2016/0038866 A1 entitled "ceramic filters" describes an additively manufactured ceramic filter. Another example is "Advanced Filtration to Improve Single Crystal Casting Yield-Mikro Systems," available at the National Energy Technology Laboratory (NETL) website. These filters are sold as stand-alone filters that may be incorporated in the wax tree as shown in FIG. 2A, and then incorporated into the ceramic mold as shown in FIG. 2B.

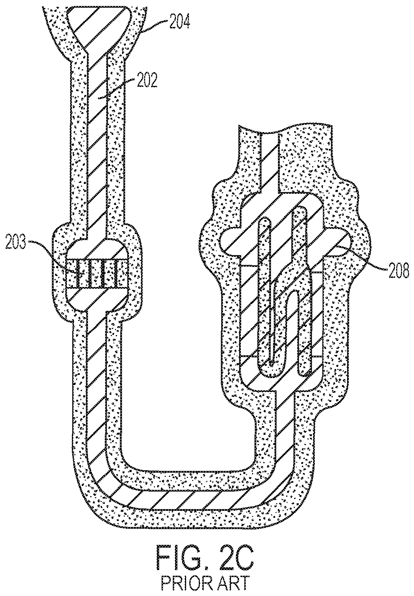

After wax injection, the entire wax tree structure 202, ceramic filter 203, and wax turbine blade 201 is then coated with a ceramic material to form a ceramic shell 206 as shown in FIG. 2B. Then, the wax is melted and removed from the shell 206 leaving a corresponding void or space 207 between the ceramic shell 206 and the internal ceramic core 200. The ceramic core is held in place after the wax is removed by pins 205. As shown in FIG. 2C, molten superalloy metal 208 is then poured into the shell to fill the void 207 therein and again encapsulate the ceramic core 202 contained in the shell 206. The molten metal is cooled and solidifies, and then the external shell 206 and internal core 202 are suitably removed leaving behind the desired metallic turbine blade.

The cast turbine blade may then undergo additional post-casting modifications, such as but not limited to drilling of suitable rows of film cooling holes through the sidewalls of the airfoil as desired for providing outlets for the internally channeled cooling air which then forms a protective cooling air film or blanket over the external surface of the airfoil during operation in the gas turbine engine. However, these post-casting modifications are limited and given the ever increasing complexity of turbine engines and the recognized efficiencies of certain cooling circuits inside turbine blades, more complicated and intricate internal geometries are required. While investment casting is capable of manufacturing these parts, positional precision and intricate internal geometries become more complex to manufacture using these conventional manufacturing processes. Accordingly, it is desired to provide an improved casting method for three dimensional components having intricate internal voids.

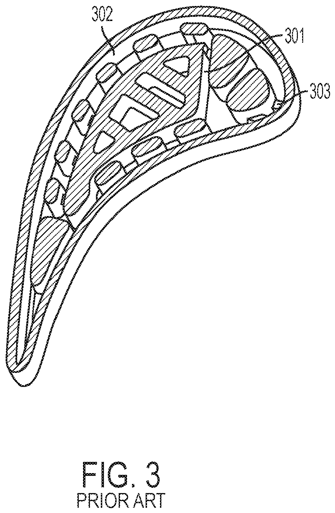

Methods for using 3-D printing to produce a ceramic core-shell mold are described in U.S. Patent No. 8,851,151 assigned to Rolls-Royce Corporation. The methods for making the molds include powder bed ceramic processes such as disclosed U.S. Patent No. 5,387,380 assigned to Massachusetts Institute of Technology, and selective laser activation (SLA) such as disclosed in U.S. Patent No. 5,256,340 assigned to 3D Systems, Inc. The ceramic core-shell molds according to the ' 151 patent are limited by the printing resolution capabilities of these processes. As shown in FIG. 3, the core portion 301 and shell portion 302 of the integrated core-shell mold is held together via a series of tie structures 303 provided at the bottom edge of the mold. Cooling passages are proposed in the ' 151 patent that include staggered vertical cavities joined by short cylinders, the length of which is nearly the same as its diameter. A superalloy turbine blade is then formed in the integrated core-shell mold using known techniques disclosed in the ' 151 patent. After a turbine blade is cast in one of these core-shell molds, the mold is removed to reveal a cast superalloy turbine blade.

There remains a need to prepare ceramic core-shell molds produced using higher resolution methods that are capable of providing fine detail cast features in the end-product of the casting process.

US 2010/003619 A1 and US 2016/221262 A1 each disclose systems and methods for fabricating three-dimensional objects. The system includes an optical imaging system providing a light source.

US 2004/231822 A1, US 8 851 151 B2 and EP 1152848 A1 each disclose a system for producing cast components from molten metal.

US 2014/271129 Aldiscloses a method for making a mold for casting advanced turbine airfoils which can include complex internal and external air cooling features to improve efficiency of airfoil cooling during operation in the gas turbine hot gas stream.

US 2015/321249 A1 discloses a method for casting an article such as a blade having an attachment root and an airfoil, the airfoil having a proximal end and a distal end.

### SUMMARY

The present invention is defined by the appended Claims. In a first aspect, the invention relates to a method for fabricating a ceramic casting mold in accordance with claim 1.

In another aspect, the invention also relates to a method of preparing a cast component in accordance with claim 3.

In one aspect, the cast component is a turbine blade or a stator vane. Preferably the turbine blade or stator vane is used in a gas turbine engine in, for example, an aircraft engine or power generation. The turbine blade is preferably a single crystal cast turbine blade having a cooling hole pattern defined by the ceramic filaments mentioned above. Preferably, the filaments join the core portion and shell portion where each filament spans between the core and shell, the filaments having a cross sectional area ranging from 0.01 to 2 mm².

In another aspect, the invention relates to a ceramic casting mold in accordance with claim 5. Preferably, the cast component is a turbine blade or stator vane and the plurality of filaments joining the core portion and shell portion define a plurality of cooling holes in the turbine blade upon removal of the mold. The plurality of filaments joining the core portion and shell portion have a cross sectional area ranging from 0.01 to 2 mm². The ceramic may be a photopolymerized ceramic or a cured photopolymerized ceramic.

### BRIEF DESCRIPTION OF THE DRAWINGS

FIG. 1 is a flow diagram showing the steps for conventional investment casting.
FIG. 2A is a schematic diagram showing a conventional ceramic mold attached to a wax tree structure for investment casting of a turbine blade.
FIG. 2B is a schematic diagram showing the conventional ceramic mold of FIG. 2A after the wax has been removed.
FIG. 2C is a schematic diagram showing the conventional ceramic mold of FIG. 2A after molten metal is poured into the mold.
FIG. 2D is a conventional ceramic foam filter.
FIG. 2E is a conventional ceramic flat primary filter.
FIG. 3 shows a perspective view of a prior art integrated core-shell mold with ties connecting the core and shell portions.
FIGS. 4, 5, 6 and 7 show schematic lateral sectional views of a device for carrying out successive phases of the method sequence for direct light processing (DLP).
FIG. 8 shows a schematic sectional view along the line A-A of FIG. 7.
FIG. 9 shows a side view of a core-shell mold including an integrated ceramic filter.
FIG. 10 shows the integrated filter of FIG. 9 after molten metal has been added to the filter.
FIG. 11 shows a turbine blade produced using the integrated filter of FIG. 9.
FIG. 12 shows a cross-section of a multiple blade ceramic mold tree where multiple blades share a common ceramic filter.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. For example, the present invention provides a preferred method for making cast metal parts, and preferably those cast metal parts used in the manufacture of jet aircraft engines. Specifically, the production of single crystal, nickel-based superalloy cast parts such as turbine blades, vanes, and shroud components can be advantageously produced in accordance with this invention. However, other cast metal components may be prepared using the techniques and integrated ceramic molds of the present invention.

The present inventors recognized that prior processes known for making integrated core-shell molds lacked the fine resolution capability necessary to print filaments extending between the core and shell portion of the mold of sufficiently small size and quantity to result in effusion cooling holes in the finished turbine blade. In the case of earlier powder bed processes, such as disclosed in U.S. Patent No. 5,387,380 assigned to Massachusetts Institute of Technology, the action of the powder bed recoater arm precludes formation of sufficiently fine filaments extending between the core and shell to provide an effusion cooling hole pattern in the cast part. Other known techniques such as selective laser activation (SLA) such as disclosed in U.S. Patent No. 5,256,340 assigned to 3D Systems, Inc. that employ a top-down irradiation technique may be utilized in producing an integrated core-shell mold in accordance with the present invention. However, the available printing resolution of these systems significantly limit the ability to make filaments of sufficiently small size to serve as effective cooling holes in the cast final product.

The present inventors have found that the integrated core-shell mold of the present invention can be manufactured using direct light processing (DLP). DLP differs from the above discussed powder bed and SLA processes in that the light curing of the polymer occurs through a window at the bottom of a resin tank that projects light upon a build platform that is raised as the process is conducted. With DLP an entire layer of cured polymer is produced simultaneously, and the need to scan a pattern using a laser is eliminated. Further, the polymerization occurs between the underlying window and the last cured layer of the object being built. The underlying window provides support allowing thin filaments of material to be produced without the need for a separate support structure. In other words, producing a thin filament of material bridging two portions of the build object is difficult and was typically avoided in the prior art. For example, the '151 patent discussed above in the background section of this application used vertical plate structures connected with short cylinders, the length of which was on the order of their diameter. Staggered vertical cavities are necessitated by the fact that the powder bed and SLA techniques disclosed in the '151 patent require vertically supported ceramic structures and the techniques are incapable of reliably producing filaments. In addition, the available resolution within a powder bed is on the order of 1/8" making the production of traditional cooling holes impracticable. For example, round cooling holes generally have a diameter of less than 2 mm corresponding to a cooling hole area below 3.2 mm². Production of a hole of such dimensions requires a resolution far below the size of the actual hole given the need to produce the hole from several voxels. This resolution is simply not available in a powder bed process. Similarly, stereolithography is limited in its ability to produce such filaments due lack of support and resolution problems associated with laser scattering. But the fact that DLP exposes the entire length of the filament and supports it between the window and the build plate enables producing sufficiently thin filaments spanning the entire length between the core and shell to form a ceramic object having the desired cooling hole pattern. Although powder bed and SLA may be used to produce filaments, their ability to produce sufficiently fine filaments as discussed above is limited.

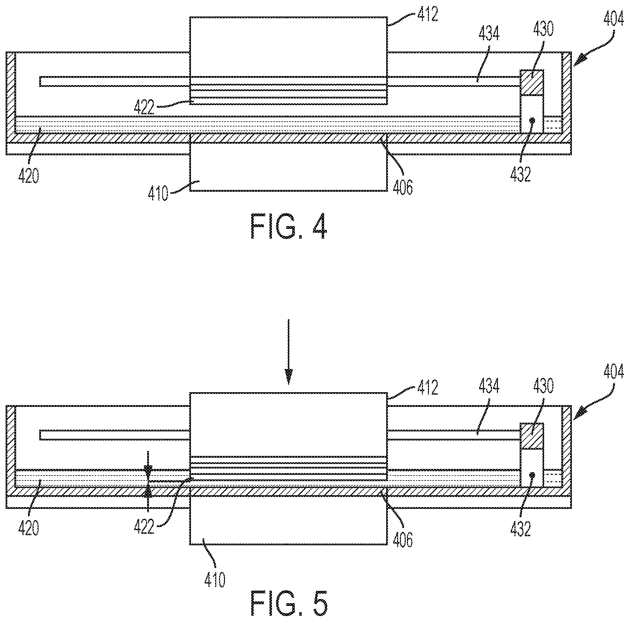

One suitable DLP process is disclosed in U.S. Patent No. 9,079,357 assigned to Ivoclar Vivadent AG and Technische Universitat Wien, as well as WO 2010/045950 A1 and US 2011310370, which are discussed below with reference to FIGS. 4-8. The apparatus includes a tank 404 having at least one translucent bottom portion 406 covering at least a portion of the exposure unit 410. The exposure unit 410 comprises a light source and modulator with which the intensity can be adjusted position-selectively under the control of a control unit, in order to produce an exposure field on the tank bottom 406 with the geometry desired for the layer currently to be formed. As an alternative, a laser may be used in the exposure unit, the light beam of which successively scans the exposure field with the desired intensity pattern by means of a mobile mirror, which is controlled by a control unit.

Opposite the exposure unit 410, a production platform 412 is provided above the tank 404; it is supported by a lifting mechanism (not shown) so that it is held in a height-adjustable way over the tank bottom 406 in the region above the exposure unit 410. The production platform 412 may likewise be transparent or translucent in order that light can be shone in by a further exposure unit above the production platform in such a way that, at least when forming the first layer on the lower side of the production platform 412, it can also be exposed from above so that the layer cured first on the production platform adheres thereto with even greater reliability.

The tank 404 contains a filling of highly viscous photopolymerizable material 420. The material level of the filling is much higher than the thickness of the layers which are intended to be defined for position-selective exposure. In order to define a layer of photopolymerizable material, the following procedure is adopted. The production platform 412 is lowered by the lifting mechanism in a controlled way so that (before the first exposure step) its lower side is immersed in the filling of photopolymerizable material 420 and approaches the tank bottom 406 to such an extent that precisely the desired layer thickness Δ (see FIG. 5) remains between the lower side of the production platform 412 and the tank bottom 406. During this immersion process, photopolymerizable material is displaced from the gap between the lower side of the production platform 412 and the tank bottom 406. After the layer thickness Δ has been set, the desired position-selective layer exposure is carried out for this layer, in order to cure it in the desired shape. Particularly when forming the first layer, exposure from above may also take place through the transparent or translucent production platform 412, so that reliable and complete curing takes place particularly in the contact region between the lower side of the production platform 412 and the photopolymerizable material, and therefore good adhesion of the first layer to the production platform 412 is ensured. After the layer has been formed, the production platform is raised again by means of the lifting mechanism.

These steps are subsequently repeated several times, the distance from the lower side of the layer 422 formed last to the tank bottom 406 respectively being set to the desired layer thickness Δ and the next layer thereupon being cured position-selectively in the desired way.

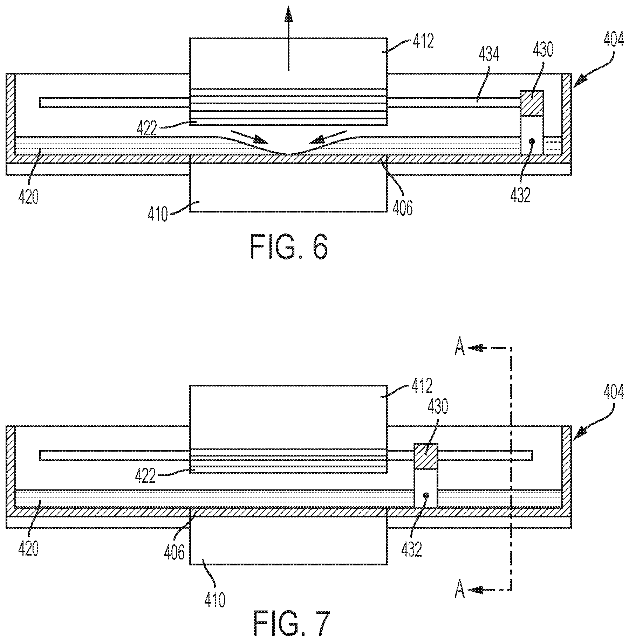

After the production platform 412 has been raised following an exposure step, there is a material deficit in the exposed region as indicated in FIG. 6. This is because after curing the layer set with the thickness Δ, the material of this layer is cured and raised with the production platform and the part of the shaped body already formed thereon. The photopolymerizable material therefore missing between the lower side of the already formed shaped body part and the tank bottom 406 must be filled from the filling of photopolymerizable material 420 from the region surrounding the exposed region. Owing to the high viscosity of the material, however, it does not flow by itself back into the exposed region between the lower side of the shaped body part and the tank bottom, so that material depressions or "holes" can remain here.

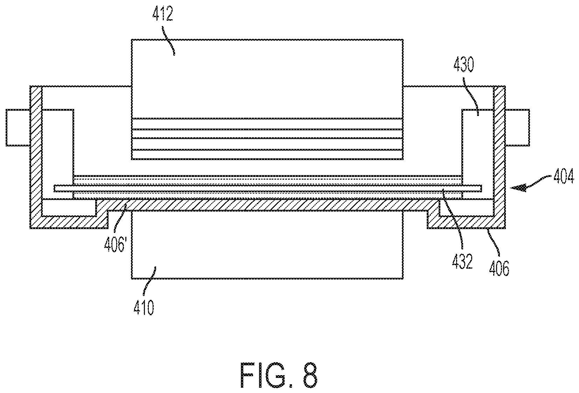

In order to replenish the exposure region with photopolymerizable material, an elongate mixing element 432 is moved through the filling of photopolymerizable material 420 in the tank. In the exemplary embodiment represented in FIGS. 4 to 8, the mixing element 432 comprises an elongate wire which is tensioned between two support arms 430 mounted movably on the side walls of the tank 404. The support arms 430 may be mounted movably in guide slots 434 in the side walls of the tank 404, so that the wire 432 tensioned between the support arms 430 can be moved relative to the tank 404, parallel to the tank bottom 406, by moving the support arms 430 in the guide slots 434. The elongate mixing element 432 has dimensions, and its movement is guided relative to the tank bottom, such that the upper edge of the elongate mixing element 432 remains below the material level of the filling of photopolymerizable material 420 in the tank outside the exposed region. As can be seen in the sectional view of FIG. 8, the mixing element 432 is below the material level in the tank over the entire length of the wire, and only the support arms 430 protrude beyond the material level in the tank. The effect of arranging the elongate mixing element below the material level in the tank 404 is not that the elongate mixing element 432 substantially moves material in front of it during its movement relative to the tank through the exposed region, but rather this material flows over the mixing element 432 while executing a slight upward movement. The movement of the mixing element 432 from the position shown in FIG. 6, to, for example, a new position in the direction indicated by the arrow A, is shown in FIG. 7. It has been found that by this type of action on the photopolymerizable material in the tank, the material is effectively stimulated to flow back into the material-depleted exposed region between the production platform 412 and the exposure unit 410.

The movement of the elongate mixing element 432 relative to the tank may firstly, with a stationary tank 404, be carried out by a linear drive which moves the support arms 430 along the guide slots 434 in order to achieve the desired movement of the elongate mixing element 432 through the exposed region between the production platform 412 and the exposure unit 410. As shown in FIG. 8, the tank bottom 406 has recesses 406' on both sides. The support arms 430 project with their lower ends into these recesses 406'. This makes it possible for the elongate mixing element 432 to be held at the height of the tank bottom 406, without interfering with the movement of the lower ends of the support arms 430 through the tank bottom 406.

Other alternative methods of DLP may be used to prepare the integrated core-shell molds of the present invention. For example, the tank may be positioned on a rotatable platform. When the workpiece is withdrawn from the viscous polymer between successive build steps, the tank may be rotated relative to the platform and light source to provide a fresh layer of viscous polymer in which to dip the build platform for building the successive layers.

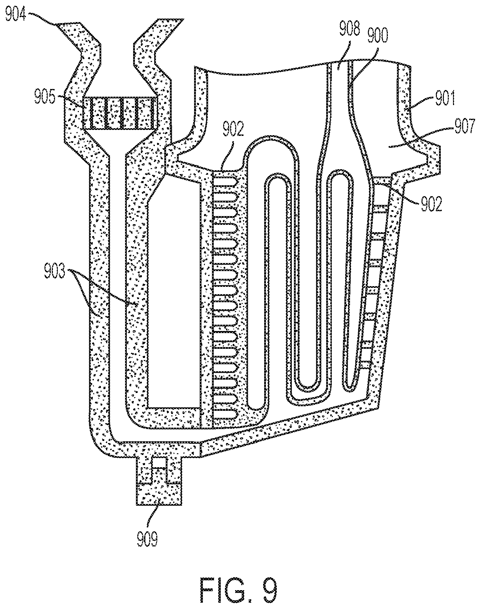

FIG. 9 shows a schematic side view of an integrated core-shell mold with filaments 902 connecting the core 900 and shell portions 901 of the integrated mold. By printing the ceramic mold using the above DLP printing process, the mold can be made in a way that allows the point of connections between the core and shell to be provided through filaments 902. Once the core-shell mold is printed, it may be subject to a post-heat treatment step to cure the printed ceramic polymer material. The cured ceramic mold may then be used similar to the traditional casting process used in the production of superalloy turbine blades and stator vanes.

The mold also includes a tube 903 and a funnel section 904 for flowing liquid metal into the integrated mold. An integrated filter 905 is provided within the flow-path for liquid metal as shown in FIG. 9.

A port 909 is provided for cleaning the integrated core-shell mold before heat treatment and/or metal addition. After printing the ceramic mold by DLP there may be uncured resin within the mold portion or filter portion. The port 909 is provided to allow a flowpath for solvent used to remove uncured resin. In the embodiment shown in FIG. 9, the port 909 is placed underneath the tube 903. If desired, several cleaning ports may be provided in the tube portion or core-shell mold portion. The port 909 may include a screw cap which can be directly printed in the DLP process. However, any method of closing the port may be used. For example, in one aspect the cleaning port is merely a hole in the tube or mold portion that can subsequently be patched with ceramic material prior to curing the mold after the solvent cleaning step is performed.

In accordance with one aspect of the invention filaments are not used to form a cooling hole pattern. Instead, two or more filaments are provided simply to hold the ceramic core 900 in place while metal is poured into the mold.

The filaments 902 are preferably cylindrical or oval shape, but may be curved or non-linear. Their exact dimensions may be varied according to a desired film cooling scheme for a particular cast metal part. For example cooling holes may have a cross sectional area ranging from 0.01 to 2 mm². In a turbine blade, the cross sectional area may range from 0.01 to 0.15 mm², more preferably from 0.05 to 0.1 mm², and most preferably about 0.07 mm². In the case of a vane, the cooling holes may have a cross sectional area ranging from 0.05 to 0.2 mm², more preferably 0.1 to 0.18 mm², and most preferably about 0.16 mm². The spacing of the cooling holes is typically a multiple of the diameter of the cooling holes ranging from 2× to 10× the diameter of the cooling holes, most preferably about 4-7× the diameter of the holes.

The length of the filament 902 is dictated by the thickness of the cast component, e.g., turbine blade or stator vane wall thickness, and the angle at which the cooling hole is disposed relative to the surface of the cast component. The typical lengths range from 0.5 to 5 mm, more preferably between 0.7 to 1 mm, and most preferably about 0.9 mm. The angle at which a cooling hole is disposed is approximately 5 to 35° relative to the surface, more preferably between 10 to 20°, and most preferably approximately 12°. It should be appreciated that the methods of casting according to the present invention allow for formation of cooling holes having a lower angle relative to the surface of the cast component than currently available using conventional machining techniques.

Notably, the core shown in FIG. 9 is a hollow core construction. One advantage of printing a hollow core is that it reduces the extent of leaching necessary to remove the core after metal casting. In one aspect the core is completely solid ceramic material that can subsequently be leached out. In another aspect of the invention, both the core and connecting filaments are hollow allowing rapid leaching of the ceramic mold material after casting.

The ceramic filter is adapted for filtration of molten metal as it is poured into the mold. The DLP process described above is particularly suited to provide resolution sufficient to provide porosity for a ceramic filter for filtering molten metal. The particular geometry of the filter used with respect to the invention will depend upon the characteristics of the metal to be used and the design requirements of the finished product. The geometry of the conventional ceramic filters shown in FIGS. 2D and 2E may be used. Preferably, the filter has a cylindrical shape where the height of the cylinder is less than the diameter of the filter. The ceramic filter preferably includes an inlet surface and outlet surface and openings providing a pathway for liquid metal to pass from the inlet surface through the filter and then the outlet surface. The openings preferably comprise at least 60% to at least about 90% of a total volume of the ceramic filter. More preferably, the openings comprise at least 70% to at least about 85% of a total volume of the ceramic filter.

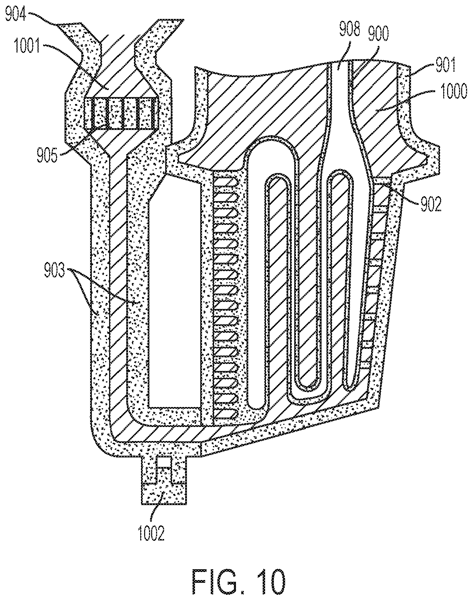

FIG. 10 shows the integrated core-shell mold of FIG. 9 filled with cast metal 1000, such as a nickel based alloy, i.e., Inconel. After formation of the integrated core-shell mold and filter, the ceramic is cleaned by rinsing solvent through the port 909. The port is then closed or plugged. The metal 1000 is filled into cavity 907, while the hollow core cavity 908 is left unfilled. After casting, the ceramic core 900, shell 901 and filaments 902 are removed using a combination of chemical and mechanical processes. The hollow nature of the core 900 allows for removal of the ceramic mold while minimizing the amount of chemical leaching needed. This saves time and reduces the potential for errors in the manufacturing process. As noted above, a solid core may be used in place of the hollow core if desired. Likewise, hollow filaments may be used in place of solid filaments.

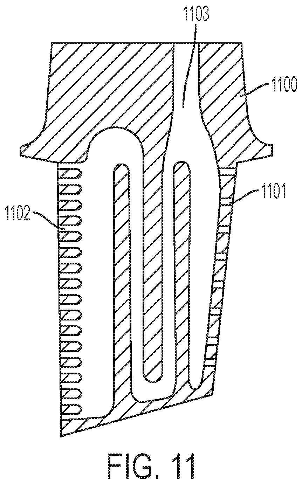

Upon leaching of the ceramic core-shell, the resulting cast object is a turbine blade having a cooling hole pattern in the surface of the blade. It should be appreciated that although FIGS. 9-10 provide a cross sectional view showing cooling holes at the leading and trailing edge of the turbine blade, that additional cooling holes may be provided where desired including on the sides of the turbine blades or any other location desired. In particular, the present invention may be used to form cooling holes within the casting process in any particular design. In other words, one would be able to produce conventional cooling holes in any pattern where drilling was used previously to form the cooling holes. However, the present invention will allow for cooling hole patterns previously unattainable due to the limitations of conventional technologies for creating cooling holes within cast components, i.e., drilling. As noted above, the filaments may be used to hold the core in place during casting. In that case, the holes in the surface provided by the filaments can be closed using a brazing or equivalent operation. As shown in FIG. 10, the filter 905 includes the metal 1000 poured through the funnel and through the filter. FIG. 11 shows a cast turbine blade 1100 with cooling holes 1101, 1102 connecting the blade surface to the hollow core 1103 of the blade.

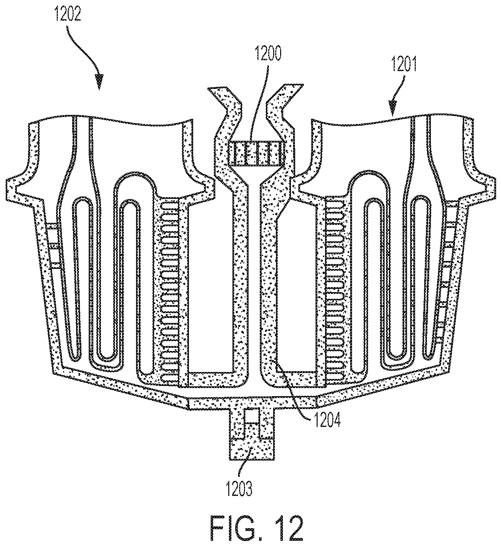

FIG. 12 shows an example where a filter element 1200 is oriented to filter molten metal before it enters a first cavity of a first turbine blade mold 1201 and a second cavity of a second turbine blade mold 1202. Additional turbine blade molds may be provided in a direction coming out of the page (not shown in the cross-sectional view that is provided). A port 1203 is located at the lowest portion of the metal supply tube 1204 for rinsing uncured ceramic polymer from the mold before filling with metal.

After leaching, the resulting holes in the turbine blade from the core print filaments may be brazed shut if desired. Otherwise the holes left by the core print filaments may be incorporated into the design of the internal cooling passages. Alternatively, cooling hole filaments may be provided to connect the tip plenum core to the shell in a sufficient quantity to hold the tip plenum core in place during the metal casting step.

After printing the core-shell mold structures in accordance with the invention, the core-shell mold may be cured and/or fired depending upon the requirements of the ceramic core photopolymer material. Molten metal may be poured into the mold to form a cast object in the shape and having the features provided by the integrated core-shell mold. In the case of a turbine blade or stator vane, the molten metal is preferably a superalloy metal that formed into a single crystal superalloy turbine blade or stator vane using techniques known to be used with conventional investment casting molds.

In an aspect, the present invention relates to the core-shell mold structures of the present invention incorporated or combined with features of other core-shell molds produced in a similar manner.

This written description uses examples to disclose the invention, including the preferred embodiments, and also to enable any person skilled in the art to practice the invention, including making and using any devices or systems and performing any incorporated methods. The patentable scope of the invention is defined by the appended claims.

## Claims

1. A method for fabricating a ceramic casting mold, comprising:
(a) contacting a cured portion of a workpiece with a liquid ceramic photopolymer;
(b) irradiating a portion of the liquid ceramic photopolymer adjacent to the cured portion through a window contacting the liquid ceramic photopolymer;
(c) removing the workpiece from the uncured liquid ceramic photopolymer; and
(d) repeating steps (a) - (c) until a ceramic casting mold is formed, the ceramic casting mold comprising a core portion (900), a shell portion (901), and an integrated ceramic filter portion (905) for filtering molten metal upon addition to the ceramic casting mold, with at least one cavity between the core portion (900) and the shell portion (901), the cavity adapted to define the shape of a cast component upon casting and removal of the ceramic casting mold and the filter portion (905) oriented in the path of molten metal flowing into the cavity of the ceramic casting mold; wherein the ceramic casting mold comprises a plurality of filaments (902) joining the core portion (900) and shell portion (901).

2. A method of preparing a cast component comprising:
pouring a liquid metal (1000) into a ceramic casting mold and solidifying the liquid metal to form the cast component, the ceramic casting mold is fabricated according to claim 1 and comprising a core portion (900), a shell portion (901), and an integrated filter portion (905) for filtering molten metal upon addition to the ceramic casting mold, with at least one cavity between the core portion (900) and the shell portion (901), the cavity adapted to define the shape of the cast component upon casting and removal of the ceramic casting mold and the filter portion oriented in the path of molten metal flowing into the cavity of the ceramic casting mold, the ceramic casting mold further comprising a plurality of ceramic filaments (902) joining the core portion (900) and shell portion (901); and
removing the ceramic casting mold from the cast component by leaching at least a portion of the ceramic core through the holes in the cast component provided by the filaments (902).

3. A ceramic casting mold made of a liquid ceramic photopolymer, comprising:
a core portion (900), a shell portion (901), and an integrated filter portion (905) for filtering molten metal upon addition to the ceramic casting mold, with at least one cavity between the core portion (900) and the shell portion (901), the cavity adapted to define the shape of a cast component upon casting and removal of the ceramic casting mold and the filter portion (905) oriented in the path of molten metal flowing into the cavity of the ceramic casting mold; and
a plurality of filaments (902) joining the core portion (900) and shell portion (901).

## Patentansprüche

1. Verfahren zur Herstellung einer Keramikgussform, wobei das Verfahren umfasst:
(a) In-Kontakt-Bringen eines ausgehärteten Abschnitts eines Werkstücks mit einem Flüssigkeramik-Photopolymer;
(b) Bestrahlen eines Abschnitts des Flüssigkeramik-Photopolymers, das an den ausgehärteten Abschnitt angrenzt, durch ein Fenster, welches das Flüssigkeramik-Polymer berührt;
(c) Entnehmen des Werkstücks aus dem ungehärteten Flüssigkeramik-Photopolymer; und
(d) Wiederholen der Schritte (a) - (c), bis eine Keramikgussform gebildet ist, wobei die Keramikgussform einen Kernabschnitt (900), einen Schalenabschnitt (901) und einen integrierten Keramikfilterabschnitt (905) zum Filtern von Metallschmelze bei Hinzugabe in die Keramikgussform aufweist, mit mindestens einer Kavität zwischen dem Kernabschnitt (900) und dem Schalenabschnitt (901), wobei die Kavität eingerichtet ist, bei Anlage und Entfernung der Keramikgussform die Form eines Gussteils zu definieren, und der Filterabschnitt (905) in Richtung der in die Kavität der Keramikgussform fließenden Metallschmelze angeordnet ist; wobei die Keramikgussform eine Vielzahl von Filamenten (902) aufweist, die den Kernabschnitt (900) und Schalenabschnitt (901) verbinden.

2. Verfahren zur Herstellung eines Gussteils, wobei das Verfahren umfasst:
Gießen eines flüssigen Metalls (1000) in eine Keramikgussform und Erstarren des flüssigen Metalls zur Bildung des Gussteils, die Keramikgussform wird nach Anspruch 1 angefertigt, und weist einen Kernabschnitt (900), einen Schalenabschnitt (901) und einen integrierten Filterabschnitt (905) zum Filtern von Metallschmelze bei Anlage und Entfernung der Keramikgussform auf, mit mindestens einer Kavität zwischen dem Kernabschnitt (900) und dem Schalenabschnitt (901), wobei die Kavität eingerichtet ist, bei Anlage und Entfernung der Keramikgussform die Form eines Gussteils zu definieren, und der Filterabschnitt (905) in Richtung der in die Kavität der Keramikgussform fließenden Metallschmelze angeordnet ist; wobei die
Keramikgussform eine Vielzahl von Filamenten (902) aufweist, die sich mit dem Kernabschnitt (900) und Schalenabschnitt (901) verbinden; und
Entfernen der Keramikgussform von dem Gussteil durch Herauslösen mindestens eines Abschnitts des Keramikkerns durch die Löcher in dem Gussteil, welche durch die Filamente (902) bereitgestellt werden.

3. Keramikgussform aus einem Flüssigkeramik-Photopolymer, aufweisend:
einen Kernabschnitt (900), einen Schalenabschnitt (901) und einen integrierten Keramikfilterabschnitt (905) zum Filtern von Metallschmelze bei Anlage und Entfernung der Keramikgussform, mit mindestens einer Kavität zwischen dem Kernabschnitt (900) und dem Schalenabschnitt (901), wobei die Kavität eingerichtet ist, die Form eines Gussteils bei Anlage und Entfernung der Keramikgussform zu definieren, und den Filterabschnitt (905), der in Richtung der in die Kavität der Keramikgussform fließenden Metallschmelze angeordnet ist; und
eine Vielzahl von Filamenten (902), die den Kernabschnitt (900) und Schalenabschnitt (901) verbinden.

## Revendications

1. Procédé de fabrication d'un moule de coulée céramique, comprenant :
(a) la mise en contact d'une partie durcie d'une pièce avec un photopolymère céramique liquide ;
(b) l'irradiation d'une partie du photopolymère céramique liquide adjacente à la partie durcie à travers une fenêtre en contact avec le photopolymère céramique liquide ;
(c) le retrait de la pièce du photopolymère céramique liquide non durci ; et
(d) la répétition des étapes (a) à (c) jusqu'à ce qu'un moule de coulée céramique soit formé, le moule de coulée céramique comprenant une partie noyau (900), une partie enveloppe (901), et une partie filtre céramique intégré (905) pour filtrer le métal fondu lors de l'ajout au moule de coulée céramique, avec au moins une cavité entre la partie noyau (900) et la partie enveloppe (901), la cavité étant adaptée pour définir la forme d'un composant coulé lors de la coulée et du retrait du moule de coulée céramique et la partie filtre (905) étant orientée dans la trajectoire du métal fondu s'écoulant dans la cavité du moule de coulée céramique ; le moule de coulée céramique comprenant une pluralité de filaments (902) reliant la partie noyau (900) et la partie enveloppe (901).

2. Procédé de préparation d'un composant coulé comprenant :
le versement d'un métal liquide (1000) dans un moule de coulée céramique et la solidification du métal liquide pour former le composant coulé, le moule de coulée céramique étant fabriqué selon la revendication 1 et comprenant une partie noyau (900), une partie enveloppe (901), et une partie filtre intégré (905) pour filtrer le métal fondu lors de l'ajout au moule de coulée céramique, avec au moins une cavité entre la partie noyau (900) et la partie enveloppe (901), la cavité étant adaptée pour définir la forme du composant coulé lors de la coulée et du retrait du moule de coulée céramique et la partie filtre étant orientée dans la trajectoire du métal fondu s'écoulant dans la cavité du moule de coulée céramique, le moule de coulée céramique comprenant en outre une pluralité de filaments céramiques (902) reliant la partie noyau (900) et la partie enveloppe (901) ; et
le retrait du moule de coulée céramique du composant coulé par lixiviation d'au moins une partie du noyau céramique à travers les trous dans le composant coulé fournis par les filaments (902).

3. Moule de coulée céramique réalisé en un photopolymère céramique liquide, comprenant :
une partie noyau (900), une partie enveloppe (901), et une partie filtre intégré (905) pour filtrer le métal fondu lors de l'ajout au moule de coulée céramique, avec au moins une cavité entre la partie noyau (900) et la partie enveloppe (901), la cavité étant adaptée pour définir la forme d'un composant coulé lors de la coulée et du retrait du moule de coulée céramique et la partie filtre (905) étant orientée dans la trajectoire du métal fondu s'écoulant dans la cavité du moule de coulée céramique ; et
une pluralité de filaments (902) reliant la partie noyau (900) et la partie enveloppe (901).
